# FASCICULE DE BREVET EUROPEEN

(11) **EP 0 465 284 B1**
(45) Date de publication et mention de la délivrance du brevet: **18.01.1995**
(21) Numéro de dépôt: 91401568.0
(22) Date de dépôt: 13.06.1991
(51) Int. Cl.: B60P 3/00

(54) **Station mobile aérotransportable de décontamination**
Mobile, auf dem Luftweg beförderbare Entseuchungsvorrichtung
Mobile station, transportable by air, for decontamination

(30) Priorité: 25.06.1990 FR 9007962
(43) Date de publication de la demande: 08.01.1992
(73) Titulaire: Legueu, Paul, F-44380 Pornichet (FR)
(72) Inventeur: Legueu, Paul, F-44380 Pornichet (FR)
(74) Mandataire: Rodhain, Claude

(56) Documents cités:
- FR-A- 1 471 914
- GB-A- 544 773
- US-A- 3 567 273
- RESEARCH DISCLOSURE vol. 291, Juillet 1988, HAVANT GB: 'mobile water and supply unit'

## Description

L'invention concerne une station mobile aérotransportable de décontamination et plus spécifiquement un véhicule automobile doté de l'ensemble des équipements utiles à la décontamination nucléaire, chimique ou bactériologique, des objets, véhicules ou personnels contaminés à la suite d'un accident industriel ou d'un conflit militaire.

La contamination nucléaire, chimique ou bactériologique a fait son apparition il y a plusieurs décennies, et la nécessité d'une décontamination est apparue déjà avec beaucoup d'acuité au cours de la Seconde Guerre Mondiale. La priorité accordée au cours des dernières années aux centrales nucléaires a fait naître, là encore, des risques importants de contamination et une catastrophe récente en est une preuve tangible. De plus, les armes chimiques et bactériologiques constituent une menace permanente dans les conflits locaux, de sorte que là encore la décontamination constitue, si la prévention n'a pas rempli son office, le seul moyen de porter assistance sur le terrain.

On connaît déjà des appareils de décontamination capables de mélanger, selon un dosage prédéterminé, de l'eau et des agents de décontamination, nucléaires, chimiques ou bactériologiques. Ce type d'appareils est généralement constitué d'un générateur haute-pression capable de fournir à des moyens d'aspersion tels que des lances, des rampes ou des douches, l'eau à basse ou haute pression additionnée, éventuellement, d'un agent décontaminant. Ce genre d'appareil se présente sous la forme d'une unité comprenant des moyens de chauffage pour porter l'eau à une température où elle peut atteindre l'état de vapeur, c'est-à-dire au-dessus de 100°C dans les conditions atmosphériques normales, cette unité comprenant en outre un réservoir d'agent(s) de décontamination, une pompe soit pour puiser l'eau dans une ressource naturelle, soit pour la prélever dans un réseau de distribution, et, enfin, des conduites destinées à être connectées d'une part à l'arrivée d'eau et d'autre part aux moyens d'aspersion.

On connaît par exemple par le brevet US-A-3 567 273, une station mobile de décontamination, notamment nucléaire, chimique ou bactériologique, comprenant un véhicule automobile ayant une cabine de pilotage et une plate-forme supportées par un châssis monté sur roues et comportant des longerons servant de structure porteuse à la plate-forme, des réservoirs d'eau fixes de capacité relativement réduite, des cuves de stockage d'agent de décontamination, un générateur haute-pression de décontamination pour décontaminer la station elle-même, et un système de vannes pour distribuer l'eau à l'intérieur de celle-ci, car cette station est destinée à la décontamination des êtres ou des objets sous condition que ceux-ci puissent avoir accès à l'intérieur, dans le cadre plus particulièrement de mesures de Défense Civile.

Un inconvénient important de ces appareils réside dans le fait qu'ils ne sont pas totalement autonomes puisque leur utilisation est nécessairement subordonnée à l'existence d'une réserve d'eau qui peut être une ressource naturelle (rivière, étang, puits, etc.) soit, dans un site urbain, un réseau de distribution d'eau traditionnel. Or, les appareils de décontamination doivent être fréquemment acheminés dans des zones désertiques ou en des lieux d'accès difficile où il n'existe ni réserves d'eau, ni voies d'accès permettant, par exemple, d'amener sur place, par véhicule, les unités de décontamination en question. En outre, leur transport par avion est également sans grand intérêt puisqu'en tout état de cause l'usage de telles unités est subordonné à l'existence d'une réserve d'eau.

La solution à ce problème semblait être l'association de tels appareils de décontamination à une source d'eau spécifique, par exemple une citerne portée par un véhicule automobile. Malheureusement, là encore, le problème n'est en fait pas résolu car si, effectivement, l'unité de décontamination peut être aisément raccordée à la citerne, l'acheminement de cet ensemble sur des lieux d'accès dificiles n'est pas facilité pour autant, à partir du moment où l'on ne dispose d'aucune structure routière permettant d'atteindre les zones sinistrées, par exemple des zones de combat qui peuvent se situer dans les terrains les plus accidentés. Il reste donc à concevoir un équipement qui puisse être par exemple parachuté directement sur "le théâtre des opérations" mais cela suppose un véhicule de faibles dimensions ou du moins un véhicule à plate-forme surbaissée afin de pouvoir entrer dans un avion cargo en vue d'être aérotransporté et parachuté sur place.

A cet effet, l'invention porte sur une combinaison d'équipements qui par leur association et leur interaction donnent naissance à un ensemble de fonctionnement autonome et acheminable pour la première fois en tout lieu nécessitant une intervention de décontamination civile ou militaire.

L'invention concerne donc une station mobile de décontamination, notamment nucléaire, chimique ou bactériologique, du type comprenant un véhicule automobile ayant une cabine de pilotage et une plateforme supportées par un châssis monté sur roues et comportant des longerons servant de structure porteuse à la plate-forme, des réservoirs d'eau, au moins une cuve de stockage d'agent de décontamination, un générateur haute-pression de décontamination, et un système de vannes, station caractérisée en ce que pour qu'elle soit aérotransportable et présente une grande autonomie de décontamination, ses longerons sont contre-coudés vers le sol dans leur région située approximativement sous la cabine, les réservoirs comprennent une citerne de grande capacité et un réservoir auxiliaire mobile de dimensions modifiables, elle comprend également un groupe moto-pompe, et le système de vannes comporte une vanne reliée à une prise d'arrivée d'eau, à l'aspiration de la pompe et à la sortie de la citerne, et une autre vanne reliée à une prise de sortie d'eau, au refoulement de la pompe, et à l'entrée de la citerne, permettant sélectivement le remplissage de la citerne à partir d'un point d'eau, son refoulement dans le réservoir auxiliaire, et le remplissage du réservoir auxiliaire directement à partir du point d'eau, et en ce que le générateur haute-pression de décontamination est pourvu d'un groupe de chauffage et adapté à être relié au choix à la citerne et au réservoir auxiliaire, ainsi qu'à la cuve de stockage, au moyen de tuyaux amovibles en vue de délivrer de l'eau à la pression et à la température désirées additionnée à volonté dudit agent de décontamination.

Cette station peut ainsi être rapidement acheminée vers des zones désertiques ou d'accès difficile.

Selon une caractéristique avantageuse de l'invention, le générateur haute-pression est amovible en vue d'être utilisé indifféremment sur la plate-forme du véhicule et au sol, et la station comporte des moyens de levage et de transfert assurant le passage du générateur haute-pression d'un emplacement à l'autre, le réservoir auxiliaire étant alimenté par la citerne de la plate-forme et raccordé à ce générateur hautepression lorsque celui-ci est utilisé au sol.

D'autres caractéristiques et avantages de l'invention ressortiront de la description qui va suivre d'une forme de réalisation préférentielle donnée à titre d'exemple non limitatif et représentée sur les dessins annexés dans lesquels :
- la figure 1 est une vue de côté montrant schématiquement l'implantation des éléments d'une station selon l'invention, sur laquelle, à cet effet, quelques uns des équipements notamment placés à l'arrière de la plate-forme à la gauche du véhicule et visibles sur les autres vues n'ont pas été représentés pour ne pas masquer les éléments disposés du côté droit.
- la figure 2 est une vue schématique de dessus de la partie de la station de la figure 1 sur laquelle sont implantés la plupart des éléments de cette station, et montrant l'implantation de quelques uns de ces éléments,
- la figure 3 est une vue schématique arrière de la même partie de la station de la figure 1 et montrant également l'implantation de quelques un des éléments de cette station.

La station selon l'invention est un système complet et autonome de décontamination notamment nucléaire, chimique ou bactériologique, conçu pour intervenir rapidement sur le terrain de manoeuvre et assurer de façon indépendante une séquence complète de décontamination, et dont la capacité de transport en eau et en produit(s) détergent(s) de toute nature ainsi que la complémentarité et la modularité des équipements lui confèrent en outre une grande souplesse d'emploi.

La mobilité du système est assurée par un véhicule 1 à six roues motrices capable de transporter le matériel et une équipe de trois personnes sur la zone de travail, sur les terrains et dans les conditions les plus difficiles.

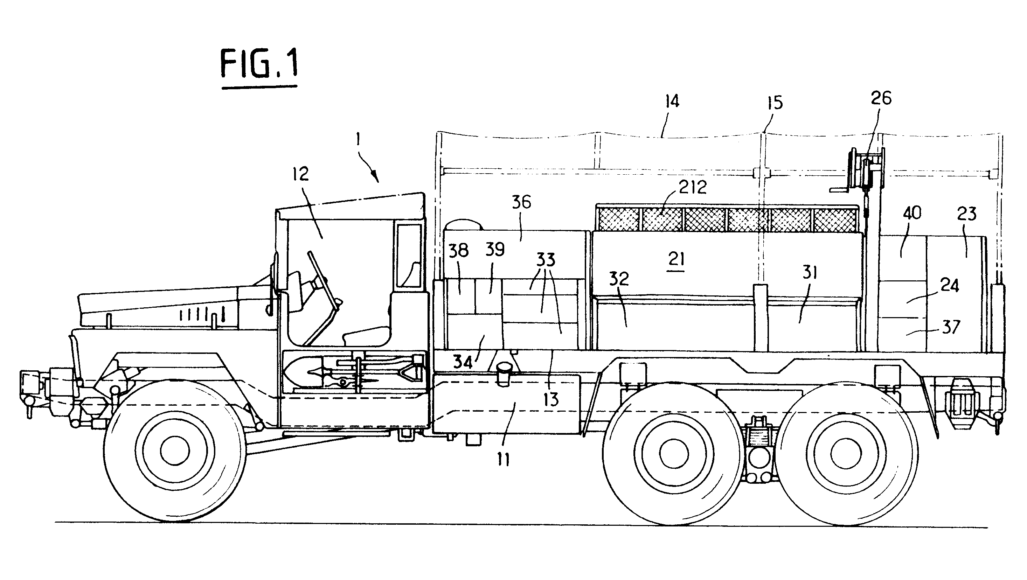

Ce véhicule (figure 1), de manière à être aérotransportable, présente une longueur modérée (environ 7 mètres) et comporte un châssis monté sur roues comportant deux longerons 11 contre-coudés vers le sol dans la région au-dessus de laquelle est prévue la cabine 12 du véhicule de telle sorte que cette cabine n'entraîne pas pour le véhicule une hauteur incompatible avec un transport par avion ; derrière la cabine de pilotage, les longerons se prolongent pour servir de structure porteuse à une plate-forme 13 supportant les éléments servant directement aux opérations de décontamination.

De manière à pouvoir opérer dans les conditions difficiles évoquées plus haut, ce véhicule est capable de rouler à une vitesse d'une centaine de kilomètres à l'heure, de franchir en charge des rampes de l'ordre de 60%, de passer des gués d'environ 1 mètre, et possède une autonomie supérieure à 1 500 kilomètres.

La plate-forme 13 du véhicule est recouverte par une bâche 14 soutenue par des arceaux 15 solidarisables à la plate-forme et plus précisément à des ridelles 16 (non représentées sur la figure 1) articulées à cette plate-forme et bordant celle-ci sur trois de ses côtés comme cela sera vu dans la suite ; la bâche 14 et les arceaux 15, destinés à protéger la plate-forme des intempéries et à banaliser la station pendant ses déplacements, sont amovibles de manière à pouvoir être déposés pour les transports par avion.

Les éléments de décontamination (figures 1 à 3), disposés sur la plate-forme qui en constitue le support et est aménagée pour l'exploitation du système en configuration intégrée, comprennent, un équipement hydraulique fixe comportant une citerne 21 de grande capacité (3 000 litres) servant de réservoir d'eau, une moto-pompe 22, un réservoir auxiliaire (non visible sur les dessins) constitué d'une bâche souple associée à une ossature repliable, dans un compartiment de rangement approprié, une ou plusieurs cuve(s) 23, 24 de stockage de produit(s) de décontamination, détergent(s) ou autre(s), un générateur haute-pression 25 amovible pourvu d'un groupe de chauffage 251, pour assurer le pompage et le réchauffage de l'eau ainsi que le dosage et le mélange des produits de décontamination, et des coffres verrouillables et des aménagements divers pour le rangement des unités collectives d'exploitation et des produits décontaminants comme cela sera décrit plus loin.

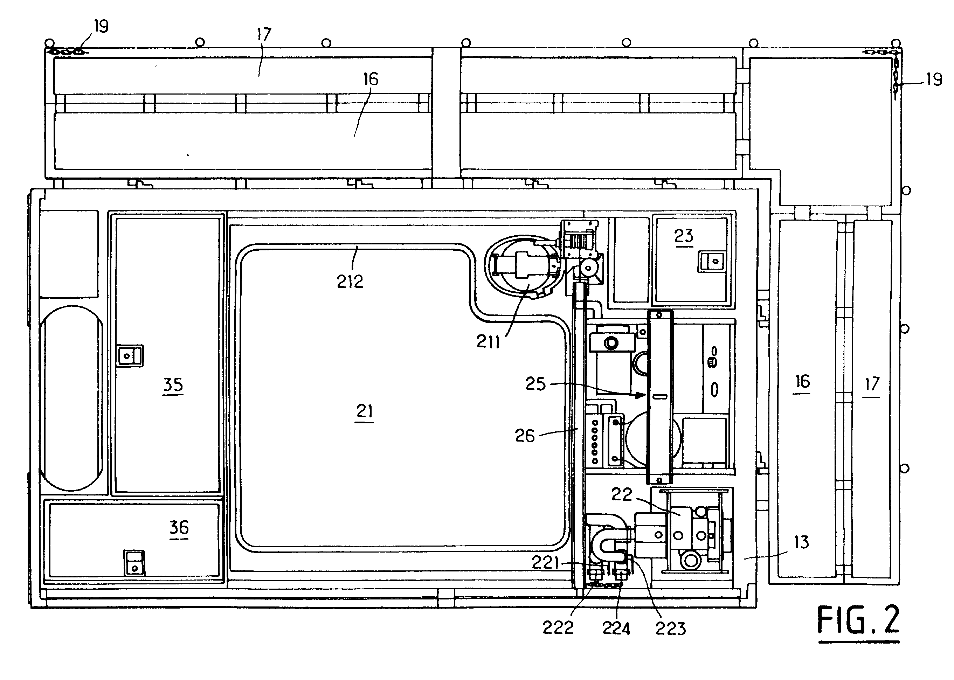

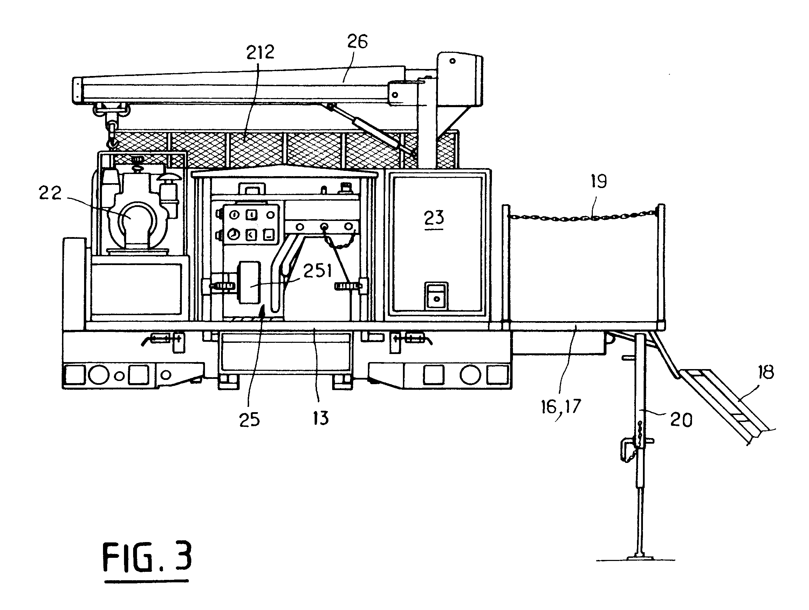

La plate-forme est comme on l'a vu équipée de ridelles 16, arrière et latérales, reliées à celle-ci par des gonds et ainsi rabattables, munies d'extensions 17 reliées à la partie supérieure des ridelles par des charnières pour former une passerelle bordant la plate-forme latéralement et à l'arrière, c'est-à-dire sur environ 7,5 mètres dans chaque dimension ; une seule ridelle latérale et la ridelle arrière sont représentées sur la figure 2, et seule une ridelle latérale est montrée sur la figure 3, en vue de simplifier les dessins. Les ridelles sont munies d'une face interne rugueuse de sorte que la passerelle soit antidérapante ; une échelle d'accès 18 dont seule une partie est représentée sur la figure 3 relie le sol à la passerelle, et un garde-corps 19 (dont seuls quelques tronçons sont représentés sur les dessins) permet à l'équipe de décontamination d'évoluer en toute sécurité à 1,2 mètre du sol (niveau de la plate-forme 13 et de la passerelle), le plancher ainsi constitué étant soutenu par des vérins mécaniques 20 reposant sur le sol.

Une potence 26 de levage et de transfert d'une force de 300 daN, fixée sur la plate-forme, ici à proximité de l'arrière de celle-ci, permet la dépose du générateur haute-pression 25 de décontamination pour son exploitation au sol aussi bien que sur la plate-forme du véhicule, en liaison avec le réservoir auxiliaire. La potence 26, montée pivotante sur au moins 180 degrés, comporte un treuil mécanique et à manivelle.

La citerne 21 servant de réservoir d'eau est en acier inoxydable ; elle est fixée directement sur le châssis du véhicule, est cloisonnée, et comporte un trou d'homme 211.

Elle est surmontée d'une galerie 212 permettant le rangement de certains éléments, par exemple de tuyaux souples. Cette citerne 21 est disposée approximativement au centre de la plate-forme et est bordée à l'arrière notamment par le groupe motopompe 22, le générateur haute-pression 25 de décontamination, et la ou les cuve(s) (23, 24) d'agent(s) de décontamination.

La moto-pompe 22 est constituée d'une pompe centrifuge entraînée par un moteur diesel monocylindre à refroidissement par air d'une puissance de 4KW à 3 600 tours par minute. La hauteur d'aspiration maximale est de 5 mètres, et le temps d'amorçage de 1 à 3 minutes est proportionnel à la hauteur d'aspiration et à la longueur de la tuyauterie. Cette moto-pompe est reliée à la citerne 21 par un ensemble de tuyaux rigides et de vannes à trois voies permettant plusieurs combinaisons pour l'alimentation et le refoulement de l'eau de la citerne. Plus précisément, l'une des vannes 221 est reliée à une prise d'arrivée d'eau 222, à l'aspiration de la pompe et à la sortie de la citerne, tandis que l'autre 223 est reliée à une prise de sortie d'eau 224, au refoulement de la pompe et à l'entrée de la citerne ; de la sorte, en fonction de la position de leur organe de commande, ces deux vannes permettent au choix le remplissage de la citerne 21 à partir d'un point d'eau dans lequel plonge un tuyau branché à la prise d'arrivée d'eau 221, le refoulement de la citerne dans le réservoir auxiliaire si celui-ci est relié à la prise de sortie d'eau 224, et le remplissage du réservoir auxiliaire directement à partir du point d'eau à condition naturellement que les deux branchements qui viennent d'être mentionnés soient réalisés.

La moto-pompe est coiffée d'un capot métallique amovible restant en place pendant les transports.

La cuve 23 de stockage d'agent de décontamination contient par exemple, pour la décontamination sur l'être humain, un liquide à très forte concentration et avec un pH neutre, sans substance caustique ou irritant nocif ; de tels produits disponibles sur le marché autorisent des temps de stockage de deux ans, des conditions de stockage de -15°C à 50°C, sont biodégradables à plus de 90%, et, avec une dilution comprise entre 5 et 15% permettent une utilisation facile et sans problème ; naturellement, à d'autres fins, elle peut contenir un autre agent de décontamination, de l'hyposulfite de sodium par exemple. Il est donc possible de prévoir une ou plusieurs cuves 23, 24 pour divers agents de décontamination choisis par exemple parmi le produit déjà mentionné, l'hyposulfite de sodium, la soude etc. ; la cuve de stockage désirée est reliée au générateur haute-pression 25 de décontamination qui est un groupe autonome connu en soi. Ce groupe comporte un moteur diesel monocylindre à quatre temps à refroidissement par air ; ce moteur est équipé d'un circuit électrique complet avec deux batteries de 12 volts en série, un démarreur, et un circuit de charge sous 24 volts, une bougie de démarrage assurant l'aide au démarrage par temps froid ; le générateur est également équipé d'un alternateur, d'une pompe d'aspiration centrifuge d'une capacité de 70 litres par minute pour une hauteur d'aspiration de 5 mètres à une distance de 20 mètres, d'une pompe haute-pression à trois pistons d'une capacité de 18 litres par minute sous une pression réglable de 20 à 90 bars, d'un groupe de chauffage assurant la production d'eau chaude ou de vapeur (14 litres par minute d'eau chaude à 95°C sous 90 bars, 550 kilogrammes par heure de vapeur à 120°C sous 20 bars, 300 kilogrammes par heure de vapeur surchauffée à 190°C sous 20 bars), et des organes de commande et de contrôle du générateur centralisés sur le dessus de l'appareil et protégés, hors exploitation, par un capot métallique amovible.

Le générateur haute-pression 25 de décontamination est donc un groupe autonome de production d'eau chaude et de vapeur surchauffée sous pression ; il est relié de manière amovible par des tuyaux souples à la cuve de stockage 23, 24 d'agent de décontamination, à la citerne 21, et au réservoir auxiliaire. Ainsi, ce générateur peut délivrer au choix de l'eau ou de la vapeur à la pression désirée (basse ou haute) additionnée éventuellement de l'agent de décontamination ; grâce aux possibilités de réglage de ce générateur, selon leur nature, les produits détergents décontaminants peuvent être aspirés et dosés soit directement par le générateur avant chauffage soit par le fluide haute-pression au niveau d'une lance d'aspersion par exemple. Comme on l'a vu, le générateur peut être exploité directement sur le véhicule avec l'eau de la citerne et au sol avec pompage direct dans un réservoir naturel ou artificiel tel que le réservoir auxiliaire qui a déjà été mentionné ; dans ce dernier cas, le véhicule avec son équipement hydraulique est disponible pour assurer notamment l'approvisionnement en eau du réservoir artificiel.

De chaque côté de la citerne 21 ainsi que devant et derrière celle-ci, des coffres 31, 32, 33, 34, 35, 36, 37, 38, 39, 40 permettent le logement respectivement d'équipements de décontamination et notamment de scaphandres ou de combinaisons étanches, de moyens d'aspersion (lances, douches, rampes et analogues), des accessoires hydrauliques et notamment des tuyaux d'aspiration (par exemple deux fois 10 mètres) et de refoulement (20 mètres) pour la vapeur et l'alimentation en eau, d'une crépine avec flotteur, du réservoir auxiliaire souple pouvant contenir également 3 000 litres, d'un lot de signalisation de zones contaminées, d'un phare 220 Volts et d'une lampe baladeuse basse-tension, d'une trousse d'accessoires tels qu'un radiomètre-dosimètre et un détecteur de composés organo-phosphorés et/ou soufrés, d'une trousse à outils, etc., ainsi que de l'unité collective de base d'exploitation du générateur haute-pression, et des aménagements appropiés permettent le rangement d'objets divers tels que l'échelle 18 d'accès à la passerelle, une autre échelle légère (fixée sur la galerie 212 et non représentée) et des bidons d'eau potable.

Un même carburant peut être utilisé pour le fonctionnement de l'ensemble de la station : véhicule, moto-pompe et générateur haute-pression de décontamination.

Le fonctionnement de la station est extrêmement simple, puisqu'il suffit de relier la citerne 21 au générateur haute-pression 22 et le générateur haute-pression 22 aux moyens d'aspersion, puis de mettre ce générateur haute-pression en fonctionnement pour laver les objets ou les personnes à décontaminer ; le branchement d'un tuyau souple à la prise d'entrée d'eau 222 et la mise en fonctionnement de la moto-pompe permettent de remplir la citerne à partir de tout point d'eau trouvé, et le branchement d'un tuyau souple à la prise de sortie d'eau 224 permet de remplir le réservoir auxiliaire ou tout autre réservoir artificiel à partir de la citerne ou d'un point d'eau naturel ; de plus, avec son équipement hydraulique et éventuellement son générateur haute-pression, la station selon l'invention peut être utilisée en matériel de premier secours contre les incendies tels que les feux de broussailles et les feux d'hydrocarbures.

Bien entendu, l'invention 'n'est pas limitée à la forme ci-dessus décrite et représentée, à partir de laquelle on pourra prévoir d'autres formes de réalisation sans sortir de son cadre, comme défini dans les revendications.

## Revendications

1. Station mobile de décontamination, notamment nucléaire, chimique ou bactériologique, du type comprenant un véhicule automobile (1) ayant une cabine de pilotage (12) et une plate-forme (13) supportées par un châssis monté sur roues et comportant des longerons (11) servant de structure porteuse à la plate-forme, des réservoirs d'eau, au moins une cuve de stockage (23, 24) d'agent de décontamination, un générateur haute-pression (25) de décontamination, et un système de vannes (221, 223), station caractérisée en ce que pour qu'elle soit aérotransportable et présente une grande autonomie de décontamination, ses longerons (11) sont contre-coudés vers le sol dans leur région située approximativement sous la cabine (12), les réservoirs comprennent une citerne (21) de grande capacité et un réservoir auxiliaire mobile de dimensions modifiables, elle comprend également un groupe moto-pompe (22), et le système de vannes comporte une vanne (221) reliée à une prise d'arrivée d'eau (222), à l'aspiration de la pompe et à la sortie de la citerne, et une autre vanne (223) reliée à une prise de sortie d'eau (224), au refoulement de la pompe, et à l'entrée de la citerne, permettant sélectivement le remplissage de la citerne (21) à partir d'un point d'eau, son refoulement dans le réservoir auxiliaire, et le remplissage du réservoir auxiliaire directement à partir du point d'eau, et en ce que le générateur haute-pression (25) de décontamination est pourvu d'un groupe de chauffage et adapté à être relié au choix à la citerne (21) et au réservoir auxiliaire, ainsi qu'à la cuve de stockage (23, 24), au moyen de tuyaux amoviles en vue de délivrer de l'eau à la pression et à la température désirées additionnée à volonté dudit agent de décontamination.

2. Station mobile selon la revendication 1, caractérisée en ce que le générateur haute-pression (25) est amovible en vue d'être utilisé indifféremment sur la plate-forme (13) du véhicule (1) et au sol, et la station comporte des moyens de levage et de transfert (26) assurant le passage du générateur hautepression d'un emplacement à l'autre, le réservoir auxiliaire étant alimenté par la citerne (21) de la plate-forme et raccordé à ce générateur haute-pression (25) lorsque celui-ci est utilisé au sol.

3. Station mobile selon la revendication 1, caractérisée en ce que les moyens de levage et de transfert (26) sont constitués par une potence montée pivotante sur au moins 180 degrés comportant un treuil mécanique et à manivelle.

4. Station mobile selon la revendication 1, caractérisée en ce qu'elle comporte des moyens d'aspersion constitués par au moins une lance, une douche, ou une rampe.

5. Station mobile selon la revendication 1, caractérisée en ce que le réservoir auxiliaire est constitué d'une bâche souple associée à une ossature repliable.

6. Station mobile selon la revendication 1, caractérisée en ce que la citerne (21) est située approximativement au centre de la plate-forme (13) et est bordée à l'arrière notamment par le groupe motopompe (22), le générateur haute-pression (25) et au moins une cuve (23, 24) d'agent(s) de décontamination.

7. Station mobile selon la revendication 1, caractérisée en ce que la plate-forme (13) comporte des ridelles (16) articulées pour former un plancher extensible soutenu par des vérins mécaniques (20).

8. Station mobile selon la revendication 1, caractérisée en ce qu'elle comporte sur au moins un côté de la citerne (21), des coffres (31, 32) pour le logement d'équipements de décontamination et notamment de scaphandres ou combinaisons étanches.

## Claims

1. A mobile decontamination station for, in particular, nuclear, chemical or bacteriological decontamination, of the type comprising a motor vehicle (1) having a driver's cabin (12) and a platform (13) which are supported by a chassis mounted on wheels and comprising side frames (11) serving as a support structure for the platform, water containers, at least one decontamination agent storage tank (23, 24), a high pressure decontamination generator (25), and a system of valves (221, 223), the station being characterised in that in order for it to be transportable by air and to have a large degree of decontamination autonomy, its side frames (11) are bent towards the ground in their region located approximately under the cabin (12), the containers comprise a large capacity tank (21) and a mobile auxiliary container of adjustable dimensions, it also comprises a motor-driven pump (22), and the system of valves comprises a valve (221) connected to a water inlet point (222), to the intake point of the pump and to the outlet of the tank, and another valve (223) connected to a water outlet point (224), to the outlet of the pump and to the inlet of the tank, selectively permitting filling of the tank (21) from a water tapping point, its discharge into the auxiliary container and the filling of the auxiliary container directly from the water tapping point, and in that the high pressure decontamination generator (25) is provided with a heating assembly and adapted to be alternatively connected to the tank (21) and to the auxiliary container, as well as to the storage tank (23, 24), by means of movable pipes in order to supply water at the desired pressure and at the desired temperature to which the said decontamination agent is added as desired.

2. A mobile station according to claim 1, characterised in that the high pressure generator (25) is movable in order to be used in the same manner on the platform (13) of the vehicle (1) and on the ground, and the station comprises raising and transfer means (26) ensuring the passage of the high pressure generator from one place to another, the auxiliary container being supplied by the tank (21) from the platform and connected to this high pressure generator (25) when this is used on the ground.

3. A mobile station according to claim 1, characterised in that the raising and transfer means (26) are comprised of a bracket crane mounted to pivot about at least 180 degrees comprising a mechanical and crank winch.

4. A mobile station according to claim 1, characterised in that it comprises spraying means comprised of at least one spray lance, a shower spray or a boom.

5. A mobile station according to claim 1, characterised in that the auxiliary container is comprised of a flexible cistern associated with a collapsible frame.

6. A mobile station according to claim 1, characterised in that the tank (21) is located approximately in the centre of the platform (13) and is bordered at the rear in particular by a motor-driven pump (22), the high pressure generator (25) and at least one tank (23, 24) of decontamination agent(s).

7. A mobile station according to claim 1, characterised in that the platform (13) comprises side panels (16) articulated to form an extendible deck supported by mechanical jacks (20).

8. A mobile station according to claim 1, characterised in that it comprises, on at least one side of the tank (21), boxes (31, 32) for housing decontamination apparatus and in particular protective suits or waterproof suits.

## Patentansprüche

1. Mobile Dekontaminationsstation, insbesondere zur nuklearen, chemischen oder bakteriologischen Dekontamination, die ein Kraftfahrzeug (1) mit einer Fahrerkabine (12) und einer Plattform (13), die von einem auf Rädern montierten Fahrgestell gestützt wird, und Längsträger (11) als Tragstruktur zur Plattform, Wasserbehälter, mindestens einen Vorratsbehälter (23, 24) für das Dekontaminationsmittel, einen Hochdruckgenerator (25) zur Dekontamination und ein Ventilsystem (221, 223) aufweist,
**dadurch gekennzeichnet**, daß sie lufttransportfähig ist und eine große Dekontaminationsautonomie aufweist, ihre Längsträger (11) in dem Bereich, der sich in etwa unter der Kabine (12) befindet, zum Boden gekröpft sind, die Behälter einen Tank (21) mit großem Füllvermögen und einen mobilen Hilfsbehälter mit veränderbaren Ausmaßen umfassen, wobei sie ebenfalls eine Motorpumpe (22) und das Ventilsystem ein Ventil (221) aufweist, das mit einer Einlaßöffnung (222) für Wasser zum Ansaugen der Pumpe und Abgabe in den Tank verbunden ist, und ein anderes Ventil (223), das mit einer Auslaßöffnung (224) für das Wasser zur Förderung durch die Pumpe und zum Eingang des Tanks verbunden ist, aufweist, wobei die Befüllung des Tanks (21) von der Wasserzapfstelle, seine Befüllung aus dem Hilfsbehälter und die Befüllung des Hilfsbehälters direkt von der Wasserzapfstelle aus selektiv möglich sind, und daß der Hochdruckgenerator (25) zur Dekontamination mit einer Heizeinrichtung versehen und geeignet ist, nach Wahl mit dem Tank (21) und dem Hilfsbehälter wie auch mit dem Vorratsbehälter (23, 24) verbunden zu werden durch lösbare Röhren bezüglich der Abgabe des Wassers bei einem Druck und einer Temperatur, die gewünscht sind, um das Dekontaminationsmittel nach Belieben hinzuzufügen.

2. Mobile Station nach Anspruch 1,
**dadurch gekennzeichnet**, daß der Hochdruckgenerator (25) beliebig von der Plattform (13) des Fahrzeugs (1) lösbar und auf dem Boden absetzbar ist, und die Station Wasch- und Weiterleitungsvorrichtungen (26) aufweist, die den Durchgang vom Hochdruckgenerator von einer Stelle zur anderen sicherstellen, wobei der Hilfsbehälter durch den Tank (21) von der Plattform befüllt wird und mit dem Hochdruckgenerator (25), falls er vom Boden benutzt wird, verbunden ist.

3. Mobile Station nach Anspruch 1,
**dadurch gekennzeichnet**, daß die Wasch- und Weiterleitungsvorrichtungen (26) aus einem um mindestens 180 Grad drehbaren Arm aufgebaut ist, der eine mechnische Winde oder Handwinde umfaßt.

4. Mobile Station nach Anspruch 1,
**dadurch gekennzeichnet**, daß sie Besprengungsvorrichtungen aufweist, die mindestens aus einem Drüsenrohr, einer Dusche oder einer Pumpe aufgebaut sind.

5. Mobile Station nach Anspruch 1,
**dadurch gekennzeichnet**, daß der Hilfsbehälter aus einem weichen, biegsamen Sammelbehälter aufgebaut ist, der mit einer zusammenklappbaren Tragkonstruktion versehen ist.

6. Mobile Station nach Anspruch 1,
**dadurch gekennzeichnet**, daß der Tank (21) etwa in der Mitte der Plattform (13) angeordnet und rückwärtig begrenzt ist, insbesondere durch die Motorpumpe (22), den Hochdruckgenerator (25) und mindestens einen Vorratsbehälter (23, 24) für das (die) Dekontaminationsmittel.

7. Mobile Station nach Anspruch 1,
**dadurch gekennzeichnet**, daß die Plattform (13) ausschwenkbare Seitenwände umfaßt zur Bildung einer erweiterbaren Platte, die durch mechanische Zylinder (20) gestützt ist.

8. Mobile Station nach Anspruch 1,
**dadurch gekennzeichnet**, daß sie auf mindestens einer Seite des Tanks (21) Kästen (31, 32) aufweist zum Unterbringen von Ausrüstungsgegenständen zur Dekontamination, insbesondere Druckanzüge und undurchlässige Kombinationen.
